(19) Europäisches Patentamt

European Patent Office

Office européen des brevets

(11) **EP 3 055 596 B1**

(12) **FASCICULE DE BREVET EUROPEEN**

(45) Date de publication et mention de la délivrance du brevet:
**02.05.2018 Bulletin 2018/18**

(21) Numéro de dépôt: **14796221.1**

(22) Date de dépôt: **06.10.2014**

(51) Int Cl.:
***F16K 3/26*** *(2006.01)*

(86) Numéro de dépôt international:
**PCT/FR2014/052530**

(87) Numéro de publication internationale:
**WO 2015/052423 (16.04.2015 Gazette 2015/15)**

(54) **PROCEDE DE CONCEPTION DE VANNE ET PROCEDE DE FABRICATION DE VANNE**

VERFAHREN ZUM ENTWURF EINES VENTILS UND VERFAHREN ZUR HERSTELLUNG EINES VENTILS

METHOD FOR DESIGNING A VALVE AND METHOD FOR PRODUCING A VALVE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.10.2013 FR 1359794**

(43) Date de publication de la demande:
**17.08.2016 Bulletin 2016/33**

(73) Titulaire: **SNECMA**
**75015 Paris (FR)**

(72) Inventeurs:
• **LE GONIDEC, Serge, Daniel**
**F-27200 Vernon (FR)**

• **HUE, Valentin**
**F-27200 Vernon (FR)**
• **CARON, Anthony**
**F-76000 Rouen (FR)**
• **BARRE, William**
**F-27400 Louviers (FR)**

(74) Mandataire: **Duflos, Bertrand Guillaume et al**
**Cabinet Beau de Loménie**
**158, rue de l'Université**
**75340 Paris Cedex 07 (FR)**

(56) Documents cités:
**WO-A1-2007/118666      US-A- 6 135 414**
**US-A1- 2008 054 208      US-A1- 2012 085 951**

**Description**

La présente invention concerne un procédé de conception d'une vanne commandable, applicable à une vanne présentant un orifice de passage de fluide de section variable que la commande appliquée à la vanne permet de contrôler le débit dudit fluide à travers un clapet. La commande appliquée à la vanne permet plus précisément de commander l'aire de la section de passage de la vanne, appelée ici plus simplement la « section de passage ».

Le terme « clapet » désigne ici de manière large tout organe mécanique ou ensemble de pièces mécaniques susceptible(s) de se déplacer pour modifier la section de passage de la vanne, c'est-à-dire susceptible(s) de se déplacer pour faciliter ou au contraire entraver la circulation du fluide dans la canalisation sur lequel la vanne est disposée. Un clapet peut ainsi prendre la forme d'un volet, d'un tiroir, d'un boisseau, etc.

Différents procédés de conception de vannes commandables et différents types de vannes commandables sont divulgués par les documents US2012/085951, US 6,135,414, US2008/054208 et WO2007/118666.

Lors de la conception d'un système dans lequel circule du fluide, on cherche habituellement dans la mesure du possible à utiliser des composants, en particulier des composants mécaniques, standard, qui sont généralement moins chers.

On intègre donc à un tel système le plus souvent des vannes relativement standard.

D'autre part, lors de la conception du système, on connaît à l'avance ou éventuellement on détermine, pour différentes circonstances envisagées, quel doit être le comportement du système.

Pour ces différentes circonstances, on est donc notamment conduit à définir les lois de réponse souhaitées des différents constituants actifs du système (actionneurs, moyens de régulation tels que des vannes, moteurs, pompes, etc.), dont les actions gouvernent l'évolution du système. On est donc notamment conduit à définir les lois de réponse indiquant, dans les circonstances envisagées, l'évolution souhaitée de la valeur en fonction du temps (c'est-à-dire les variations) des actions appliquées ou réalisées par les constituants considérés, et qu'il convient d'appliquer au système pour que celui-ci présente le comportement souhaité.

Par exemple si le système étudié comporte une vanne commandable, on est amené à définir la loi de réponse souhaitée de la vanne, dans différentes circonstances. La loi de réponse d'une telle vanne est la fonction donnant les valeurs de la section de passage de l'orifice de la vanne en fonction du temps.

Pour assurer qu'une vanne présente en sortie une réponse souhaitée (c'est-à-dire que la section de passage de la vanne varie en prenant successivement les différentes valeurs souhaitées), on prévoit habituellement des moyens de commande, généralement comprenant une unité de commande électronique constituée par une carte électronique ou un calculateur, et l'on détermine la loi de commande de la vanne, qui permettent que, lorsque la loi de commande de la vanne est appliquée à celle-ci par l'unité de commande, la section de passage suive la loi de réponse souhaitée.

Un tel procédé de conception présente l'inconvénient de rendre nécessaire l'utilisation de moyens de commande relativement complexes pour commander les différents composants actifs du système.

En effet, une certaine complexité de la commande peut être rendue nécessaire par le fait que la loi de déplacement du clapet de la vanne elle-même peut éventuellement être complexe, étant donné le profil standard usuel qui est par exemple de type linéaire ou logarithmique ; de plus, dans certains cas il peut être nécessaire de piloter la position du clapet avec une grande précision, et/ou de grandes accélérations, et/ou un couple ou une force élevé(e), toutes ces différentes circonstances conduisant à accroître le coût et la complexité des moyens de commande et plus particulièrement de l'asservissement en position.

Il s'ensuit que le coût total du système n'est pas optimisé.

Un but de la présente invention est de remédier aux inconvénients précités.

Un but de la présente invention est de définir un procédé de conception d'une vanne présentant un orifice de passage de fluide de section (S) variable, ladite section dépendant de la position d'un clapet de la vanne, et dans laquelle la position dudit clapet peut être contrôlée par une commande simple appliquée à la vanne. Le terme « orifice de passage » dans la définition précédente englobe le cas où la vanne présente une ouverture unique de passage de fluide, ou encore plusieurs ouvertures pour le passage du fluide.

Un but de la présente invention est que le procédé de conception de vanne permette d'obtenir une vanne qui, dans certaines circonstances prédéterminées, présente une loi de variation de la section de passage égale à une loi de variation prédéterminée, alors même que son clapet se déplace suivant une loi de déplacement prédéterminée, notamment une loi de déplacement particulièrement simple à mettre en oeuvre, par exemple un déplacement à vitesse constante du clapet de la vanne.

Pour atteindre ces buts, selon l'invention le procédé de conception de vanne comporte les étapes suivantes :

a) on détermine, généralement par calcul informatique, une loi de variation souhaitée ($S^*(t)$) de la section de passage de la vanne, qui définit au moins dans un intervalle de temps ($\Delta t$) une variation souhaitée de la section de passage (S) de la vanne en fonction du temps

b) on fixe une loi de déplacement prédéterminée que l'on souhaite que le clapet suive durant ledit intervalle ; et

c) on définit la forme dudit orifice de passage de fluide de telle sorte qu'à chaque instant (t) durant ledit intervalle de temps, si le clapet se déplace durant ledit intervalle suivant ladite loi de déplacement prédéterminée, la section de passage (S(t)) reste égale à la section souhaitée (S*(t)) audit instant.

L'étape a) de détermination de la loi de variation souhaitée S*(t) de la section de passage de la vanne est faite de préférence par une méthode mathématique d'optimisation basée sur un modèle de simulation physique, en utilisant par exemple un solveur temporel.

L'étape c) peut notamment être mise en oeuvre par ordinateur.

La loi de variation S*(t) est choisie de préférence de telle sorte que, dans le système dont fait partie la vanne, la loi de variation S*(t) soit une loi souhaitée pour les variations de la section de la vanne au moins dans un mode de fonctionnement du système.

La loi de déplacement peut être une fonction linéaire (de type X = at + b, où a et b sont des constantes, t représente le temps, et X la position (position axiale ou angulaire notamment).

Elle peut être aussi une fonction autre qu'une fonction linéaire telle que définie ci-dessus.

Pour définir la forme de l'orifice de passage de fluide, on peut par exemple à l'instant initial de l'intervalle de temps considéré, déterminer la surface de la section de passage de la vanne dans la position correspondante du clapet ; puis faire varier progressivement le paramètre de temps dans l'intervalle considéré, et déterminer successivement, pour les différentes positions adoptées par le clapet de la vanne durant cet intervalle de temps, les différentes sections correspondantes de passage de la vanne, de telle sorte qu'à chaque instant, la section de passage de la vanne reste égale à la section souhaitée.

Grâce à la présente invention, la vanne de commande est conçue, dès la conception du système, pour que le déplacement du clapet de la vanne suive une loi de commande prédéterminée. Ainsi, la loi de déplacement peut être choisie suffisamment simple, ce qui permet de réduire la complexité des moyens de commande de la vanne. Par exemple, la loi de déplacement peut être une loi de déplacement à vitesse constante.

La mise en oeuvre du procédé conduit à réaliser des vannes ayant un orifice de passage de fluide atypique, non standard. Ainsi, la forme de l'orifice de passage de fluide (c'est-à-dire, la forme du bord ou du contour de l'orifice) peut être ni une forme géométrique usuelle ni l'addition de portions de formes géométriques usuelles, une forme géométrique usuelle étant un cercle, une ellipse, une droite ou une parabole. Les formes géométriques usuelles au sens indiqué ci-dessus comprennent donc notamment les formes polygonales. De telles formes usuelles sont utilisées en général dès lors que la section de passage doit varier de manière linéaire ou parabolique.

Notamment, la forme de l'orifice de passage de fluide (c'est-à-dire, la forme du bord ou du contour de l'orifice) peut être ni une forme géométrique usuelle ni l'addition d'au plus dix portions de formes géométriques usuelles, une forme géométrique usuelle étant un cercle, une ellipse, une droite ou une parabole.

La loi de variation souhaitée de la section de passage de la vanne peut notamment être obtenue par calcul, et cela de différentes manières.

Dans un mode de mise en oeuvre, on fixe une loi de variation souhaitée (F*(t)) d'un paramètre du système dont fait partie la vanne ; puis on détermine la loi de variation souhaitée (S*(t)) de la section de la vanne en fonction de la loi de variation souhaitée (F*(t)) du paramètre.

Dans un autre mode de mise en oeuvre, pour déterminer la loi de variation souhaitée de la section de la vanne, on détermine conjointement la loi de variation souhaitée (S*(t)) de la section de la vanne et une loi de variation souhaitée (F*(t)) d'un paramètre d'un système dont fait partie la vanne, par calcul.

Ce calcul comprend généralement une simulation du fonctionnement du système.

On détermine alors la loi de variation souhaitée S* de la section de la vanne comme étant une loi de variation (ou la loi de variation optimale) qui permet que le système présente le fonctionnement ou comportement souhaité.

Ce calcul prend en compte s'il y a lieu les interactions entre les parties du système situées en amont et les parties du système situées en aval de la vanne : ces interactions peuvent éventuellement affecter la pression et/ou le débit dans la canalisation sur laquelle la vanne est interposée.

Le paramètre du système dont on fixe la loi de variation souhaitée peut notamment être le débit de la vanne, c'est-à-dire le débit dans la canalisation sur laquelle est placée la vanne.

Ce paramètre peut plus généralement être un paramètre quelconque du système, sous réserve que la section de la vanne ait une influence sur ce paramètre.

L'invention s'étend naturellement à un procédé de fabrication d'une vanne comprenant une étape de conception d'une vanne selon le procédé de conception de vanne défini précédemment, puis une étape de fabrication de la vanne ainsi conçue.

Il est également décrit un dispositif de vanne comprenant :

- une vanne présentant un orifice de passage de fluide de section (S) variable, ladite section dépendant de la position d'un clapet de la vanne ;
- un actionneur apte à commander la position dudit clapet ;

dont:

l'actionneur est apte à entraîner le clapet à vitesse constante durant un intervalle de temps ;

la section de l'orifice de passage varie de manière non linéaire lorsque l'actionneur entraîne ledit clapet à vitesse constante durant ledit intervalle de temps ; et

la forme de l'orifice de passage de fluide n'est ni une forme géométrique usuelle ni l'addition de portions de formes géométriques usuelles, une forme géométrique usuelle étant un cercle, une ellipse, une droite ou une parabole.

La forme de l'orifice de passage de fluide est ici la forme de son bord, de son contour.

Brève description des dessins

L'invention sera bien comprise et ses avantages apparaîtront mieux, à la lecture de la description détaillée qui suit, de deux modes de réalisation représentés à titre d'exemples non limitatifs. La description se réfère aux dessins annexés sur lesquels :

- la figure 1 est une vue schématique en coupe axiale d'un dispositif de vanne selon l'invention ;
- la figure 2 est une vue schématique en perspective du clapet de vanne d'un dispositif de vanne dans un mode de réalisation de l'invention ; et
- les figures 3A, 3B et 3C représentent respectivement des courbes représentatives d'une loi de variation de débit souhaitée, d'une loi de réponse souhaitée pour la section de passage, d'une loi de déplacement de l'actionneur, pour un dispositif de vanne selon l'invention.

Description détaillée d'un mode de mise en oeuvre de l'invention

Un exemple de dispositif de vanne obtenu par le procédé selon l'invention et un exemple de mise en oeuvre du procédé selon l'invention vont maintenant être présentés dans le cadre de la conception d'un système 5 constitué par un moteur fusée 7 et ses moyens d'alimentation en carburant. Ces moyens comprennent un réservoir 8 de carburant liquide, dans lequel une pompe 9 aspire du carburant pour le refouler dans une canalisation d'alimentation 14 reliée à un orifice d'alimentation du moteur 7. Sur cette canalisation 14 est disposé un dispositif de vanne 10 qui sert à réguler l'alimentation du moteur.

Ce dispositif comprend une vanne 12 qui est la vanne de régulation servant à réguler l'alimentation en carburant du moteur 7.

La vanne 12 est ainsi insérée dans un circuit de fluide comprenant des moyens d'alimentation en fluide en amont (réservoir 8 et pompe 9), ayant une certaine impédance, et le moteur 7 en aval, ayant également une certaine impédance (vis-à-vis de l'écoulement du fluide). Les moyens d'alimentation en amont et le moteur 7 en aval sont couplés entre eux, non seulement par le circuit de fluide mais également par d'autres liaisons (mécaniques, fluidiques, etc.) non représentées.

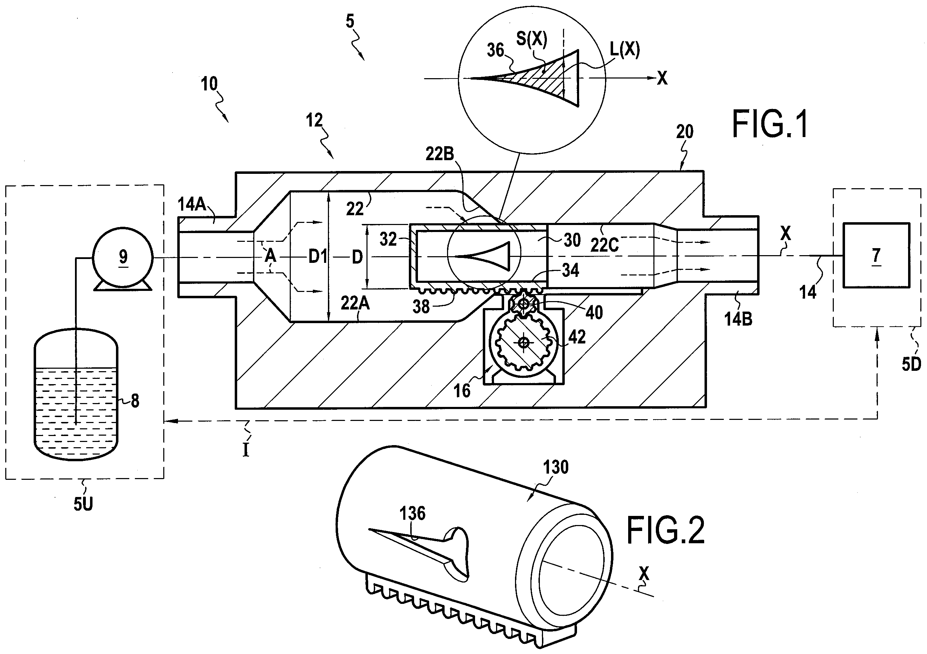

Le dispositif de vanne 10 selon l'invention est représenté sur la figure 1.

Ce dispositif comprend la vanne 12 et un actionneur 16 constitué en l'occurrence par un moteur électrique et qui sert à actionner la vanne.

La vanne 12 est principalement constituée par un corps de vanne 20 interposé entre deux parties 14A et 14B de la canalisation 14, et par un clapet 30 contenu dans le corps de vanne 20.

Le corps de vanne 20 a la forme générale d'un parallélépipède rectangle, dans lequel est formé un alésage 22 reliant les parties de canalisation 14A et 14B. L'alésage 22 s'étend suivant l'axe X de la canalisation 14.

Cet alésage présente une configuration spécifique : Il comporte sur un côté amont (à gauche sur la figure 1) une portion amont 22A de diamètre accru D1, et sur le côté aval une portion aval 22C de diamètre D, le diamètre de la portion aval étant sensiblement égal au diamètre extérieur du clapet 30. Un jeu adéquat est prévu pour permettre que le clapet 30 puisse coulisser à l'intérieur de la portion aval 22C de l'alésage 22.

Les deux portions d'alésage 22A et 22C sont reliées par une portion d'alésage 22B de forme sensiblement tronconique, permettant au diamètre de l'alésage 22 de passer continûment de la valeur D1 à la valeur D.

Le clapet 30 a la forme générale d'un tube cylindrique de section circulaire de diamètre extérieur D, fermé à l'une de ses extrémités par une paroi 32.

Il comporte en outre, sur sa paroi cylindrique 34, deux ouvertures 36 opposées de forme globalement triangulaire (mais non triangulaire), qui permettent le passage de fluide de l'extérieur vers l'intérieur du clapet.

De plus, sur la surface extérieure de la paroi cylindrique 34 du clapet 30 sont prévues des cannelures perpendiculaires à l'axe X et formant une crémaillère 38. Cette crémaillère 38 est prévue pour engrener les dents d'une roue dentée 40. Celle-ci est elle-même entraînée en rotation par une roue dentée 42 qui constitue l'organe de sortie lié à l'arbre d'entraînement du moteur 16.

Ainsi, lorsque le moteur 16 fonctionne et fait tourner la roue 42 et par suite la roue 40, cela entraîne un mouvement du clapet 30 suivant l'axe X. Le moteur 16 en tant qu'actionneur du clapet 30 pilote ainsi la position du clapet 30 suivant l'axe X.

La vanne 12 permet de réguler le débit de fluide circulant dans la canalisation 14 de la manière suivante.

Lorsque le fluide provenant de la partie amont 14A de la canalisation 14 pénètre dans le corps de vanne 20 au niveau de la portion amont 22A de l'alésage 22 (flèches A), il ne peut rejoindre la partie aval 14B de la canalisation 14 qu'en traversant le clapet 30 via les ouvertures 36.

Par conséquent, les ouvertures 36 constituent l'orifice de passage de fluide de la vanne 12, et l'aire cumulée des différentes ouvertures 36 (en l'occurrence au nombre de deux), dans la mesure où elle n'est pas obstruée par la paroi de la portion aval 22C de l'alésage 22, constitue la section de passage de la vanne 12.

Notons que la conception de la vanne 12 permet éventuellement l'utilisation du dispositif 10 avec un sens d'écoulement de fluide inverse à celui décrit ci-dessus (entrée du fluide par le partie 14B, passage du fluide dans la partie cylindrique 34 du clapet 30, puis au travers des 2 ouvertures 36, puis sortie du fluide par la portion amont 22A de l'alésage 22, et la partie de canalisation 14A).

Un exemple de procédé de conception de vanne selon l'invention va maintenant être présenté dans le cadre de la conception du système 5, avec deux modes possibles de mise en oeuvre.

Au moment de la conception du moteur fusée 7 et de ses moyens d'alimentation en carburant, il s'agit naturellement d'optimiser les différents constituants et cela en prenant en compte leurs différents modes de fonctionnement, et notamment pendant la phase de démarrage du moteur.

On essaie en particulier de réguler les variations d'un paramètre qui est le débit de fluide d'alimentation du moteur 7 via la canalisation 14.

Au démarrage du moteur fusée, ce débit de fluide, initialement nul, augmente jusqu'à une valeur de débit $F_{max}$ qui est le débit de carburant consommé par le moteur en régime stabilisé.

Pour optimiser le démarrage du moteur, il est souhaitable que l'augmentation du débit de fluide jusqu'à la valeur $F_{max}$ se fasse de manière progressive dans un intervalle de temps entre un instant $t_A$ et un instant $t_B$, selon un profil souhaité prédéterminé.

Dans un premier mode de mise en oeuvre du procédé de conception selon l'invention, on commence par fixer la loi de variation souhaitée $F^*(t)$ pour le paramètre du système que l'on souhaite réguler, à savoir le débit, pendant l'intervalle de temps $[t_A ; t_B]$.

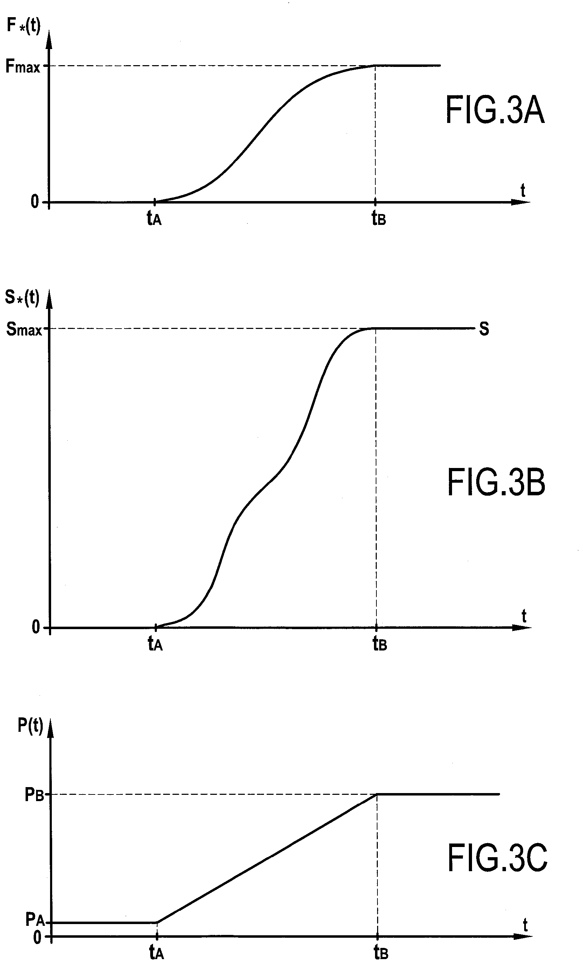

La loi $F^*$ choisie est représentée par la figure 3A.

On conçoit alors la vanne 12 d'alimentation en carburant du moteur. La difficulté consiste alors à définir cette vanne de manière à assurer qu'elle soit apte à faire évoluer ou à faire varier le paramètre du système que l'on souhaite réguler, à savoir le débit de fluide dans la canalisation, suivant la loi de variation $F^*$.

A partir de la loi de variation souhaitée $F^*$, on calcule alors la loi de variation souhaitée $S^*$ de la section $S$ de la vanne 12.

Ce calcul permet de définir la loi de réponse $S^*(t)$ souhaitée de la vanne 12, lors du démarrage du moteur, qui permet de faire passer le débit F, d'une valeur nulle à la valeur $F_{max}$ suivant la loi $F^*(t)$, lorsque la section de passage passe d'une valeur nulle (clapet 30 fermé) à l'instant $t_A$ jusqu'à la valeur $S_{max}$ à l'intant $t_B$.

Pour obtenir la fonction $S^*$, on simule le fonctionnement de l'ensemble du système 5 étudié, c'est-à-dire la portion amont 5U du système située en amont de la vanne (Fig.1), la portion aval 5D du système située en aval de la vanne, ainsi le cas échéant que les interactions entre ces deux portions du système (flèche I).

La loi de réponse souhaitée $S^*$ de la vanne 12 est alors identifiée comme la fonction ou l'une des fonctions permettant que le débit varie suivant la loi de variation $F^*$, prise comme une donnée d'entrée.

Dans un second mode de mise en oeuvre du procédé de conception selon l'invention, la loi de variation du débit souhaité dans la vanne, $F^*$, n'est pas fixée ou calculée par avance, c'est-à-dire avant de déterminer la loi de variation de la section de passage de la vanne.

Au contraire, dans ce second mode de mise en oeuvre on simule le fonctionnement du système 5 de manière à prendre en compte conjointement comme paramètres les variations de la section de la vanne (S) et les variations F(t) du paramètre que l'on souhaite réguler, à savoir dans le cas présent le débit.

On identifie alors par simulation un mode de fonctionnement satisfaisant (ou considéré comme souhaitable) du système 5. Les fonctions $S^*$ et $F^*$ sont alors définies comme les lois de variation respectivement de la section de passage de la vanne et du paramètre à réguler, le débit, qui correspondent à ce mode de fonctionnement du système.

Pour poursuivre la définition de la vanne 12, on choisit alors la loi de déplacement du clapet ; cette loi est choisie de manière à minimiser entre autres les contraintes (coût, complexité) de l'actionneur.

On définit enfin la forme des ouvertures 36 du clapet 30 sur la base d'une loi de déplacement P(t) que l'on choisit pour le clapet, et la loi de variation souhaitée de la section $S^*(t)$.

Pour cela, on fixe d'abord une position initiale PA du clapet 30 (par rapport à l'axe X), pour laquelle la plus grande partie du clapet est située à l'intérieur de la portion d'alésage 22C.

On choisit également une position finale $P_B$ du clapet 30 pour laquelle la plus grande partie du clapet est située à l'intérieur de la portion d'alésage 22A.

Ensuite, on se donne la loi de déplacement P(t) pour le clapet 30. Dans l'exemple considéré, on décide d'avoir une loi de déplacement P(t) particulièrement simple, à savoir une loi de déplacement à vitesse constante, telle que représentée sur la figure 3. La position P(t) du clapet évolue de manière linéaire en fonction du temps entre la position initiale (abscisse $P_A$) et la position finale (abscisse $P_B$) entre les instants $t_A$ et $t_B$.

La forme des ouvertures 36 du clapet peut alors être calculée.

Pour cela, on élimine la variable temps (t) dans le système :

$$\begin{cases} S = S^*(t) \\ X = P(t), \end{cases}$$

où S est la section de passage de la vanne (c'est-à-dire la surface cumulée des deux ouvertures 36), et X est la position suivant l'axe X du clapet 30.

Les deux fonctions S et X sont exprimées en fonction du temps, à savoir respectivement S*(t) et P(t). On associe aux mêmes instants considérés t les valeurs de S et de P, ce qui permet d'obtenir la relation S=f(X).

On en déduit alors pour chacune des deux ouvertures 36, sa largeur L en fonction de sa position sur l'axe des X. La surface S(X) est reliée en effet à la largeur L par la relation:

$$S(X) = \int_{P_A}^{X} L(u)\, du$$

En dérivant cette relation on obtient:

$$L(X) = S'(X).$$

Le calcul précédent permet donc d'obtenir le profil des ouvertures 36, ici défini par la fonction L donnant la largeur de l'ouverture en fonction de la position sur l'axe X.

Avec une fonction S* telle que celle représentée sur la figure 3B, la fonction L n'est pas une fonction linéaire (c'est-à-dire plus précisément affine) de l'abscisse X.

Avantageusement, du fait que les ouvertures 36 ont la forme ainsi définie, lorsque le clapet 30 se déplace à vitesse constante suivant l'axe X, la section S de passage de la vanne 12 varie suivant la loi de réponse souhaitée S*(t), et par suite le débit fluctue suivant la loi de variation souhaitée F*(t).

L'utilisation du procédé selon l'invention permet ainsi de définir des ouvertures 36 (représentatives de l'orifice de passage de la vanne 12) et donc de définir une vanne 12, dont le clapet a un profil qui permet de réaliser l'évolution souhaitée du débit (fonction F*) tout en permettant que le moteur 16 entrainant le clapet 30 soit commandé, avantageusement, par une fonction particulièrement simple, à savoir une loi de déplacement à vitesse constante. Par suite, l'utilisation d'une vanne telle que la vanne 12 permet de simplifier énormément les moyens de commande du moteur 16 et donc du système 5.

Un exemple d'un autre profil possible pour des ouvertures 136 d'un clapet de vanne selon l'invention, correspondant à une loi de réponse attendue de la vanne autre que la fonction S* envisagée précédemment, est représenté sur la figure 2.

Enfin, dans l'exemple présenté, le volet c'est-à-dire le clapet de la vanne 12 se déplace suivant un axe et sa position est une position axiale. La présente invention est également applicable notamment à des vannes équipées d'un clapet rotatif, dont la position est définie par un angle.

**Revendications**

1. Procédé de conception d'une vanne (12) présentant un orifice (36) de passage de fluide de section (S) variable, ladite section dépendant de la position d'un clapet (30) de la vanne, la position dudit clapet étant contrôlée par une commande appliquée à la vanne ; le procédé étant **caractérisé en ce qu'**il comporte les étapes suivantes :

   a) on détermine une loi de variation souhaitée (S*(t)) de la section de passage de la vanne, qui définit au moins dans un intervalle de temps (Δt) une variation souhaitée de la section de passage (S) de la vanne en fonction du temps ;
   b) on fixe une loi de déplacement prédéterminée (P(t)) que l'on souhaite que le clapet suive durant ledit intervalle ; et
   c) on définit la forme dudit orifice de passage de fluide de telle sorte qu'à chaque instant (t) durant ledit intervalle de temps, si le clapet se déplace durant ledit intervalle suivant ladite loi de déplacement (P(t)) prédéterminée, la section de passage (S(t)) reste égale à la section souhaitée (S*(t)) audit instant.

2. Procédé de conception selon la revendication 1, dans lequel ladite loi de déplacement est une loi de déplacement à vitesse constante.

3. Procédé de conception selon la revendication 1 ou 2, dans lequel on fixe une loi de variation souhaitée (F*(t)) d'un paramètre d'un système dont fait partie la vanne ; on détermine ladite loi de variation souhaitée (S*(t)) de la section de la vanne en fonction de ladite loi de variation souhaitée (F*(t)) du paramètre.

4. Procédé de conception selon la revendication 1 ou 2, dans lequel on détermine conjointement ladite loi de variation souhaitée (S*(t)) de la section de la vanne et une loi de variation souhaitée (F*(t)) d'un paramètre d'un système dont fait partie la vanne par calcul.

5. Procédé de conception selon la revendication 3 ou 4, dans lequel ledit paramètre du système est un débit de ladite vanne.

6. Procédé de fabrication d'une vanne comprenant une étape de conception d'une vanne selon un procédé de conception de vanne selon l'une quelconque des revendications 1 à 5, puis une étape de fabrication de la vanne ainsi conçue.

## Patentansprüche

**1.** Verfahren zum Entwerfen eines Ventils (12) mit einer Fluiddurchlassöffnung (36) mit variablem Querschnitt (S), wobei der Querschnitt von der Position einer Klappe (30) des Ventils abhängt, wobei die Position der Klappe durch eine auf das Ventil angewandte Steuerung gesteuert wird,
wobei das Verfahren **dadurch gekennzeichnet ist, dass** es die folgenden Schritte aufweist:

    a) Bestimmen eines Gesetzes der gewünschten Variation (S*(t)) des Durchlassquerschnitts des Ventils, das zumindest innerhalb eines Zeitintervalls ($\Delta$t) eine gewünschte Variation des Durchlassquerschnitts (S) des Ventils in Abhängigkeit von der Zeit definiert,
    b) Festlegen eines Gesetzes der vorgegebenen Verschiebung (P(t)), das die Klappe während des Intervalls befolgen soll, und
    c) Definieren der Form der Fluiddurchlassöffnung dergestalt, dass zu jedem Zeitpunkt (t) in dem Zeitintervall, wenn sich die Klappe während des Intervalls gemäß dem Gesetz der vorgegebenen Verschiebung (P(t)) bewegt, der Durchlassquerschnitt (S(t)) gleich dem gewünschten Querschnitt (S*(t)) zu dem Zeitpunkt bleibt.

**2.** Verfahren zum Entwerfen gemäß Anspruch 1, wobei das Verschiebungsgesetz ein Gesetz der Verschiebung mit konstanter Geschwindigkeit ist.

**3.** Verfahren zum Entwerfen gemäß Anspruch 1 oder 2, wobei ein Gesetz der gewünschten Variation (F*(t)) eines Parameters eines Systems, von dem das Ventil ein Teil ist, festgelegt wird, wobei das Gesetz der gewünschten Variation (S*(t)) des Ventilquerschnitts in Abhängigkeit von dem Gesetz der gewünschten Variation (F*(t)) des Parameters bestimmt wird.

**4.** Verfahren zum Entwerfen gemäß Anspruch 1 oder 2, wobei das Gesetz der gewünschten Variation (S*(t)) des Querschnitts des Ventils und ein Gesetz der gewünschten Variation (F*(t)) eines Parameters eines Systems, von dem das Ventil ein Teil ist, gemeinsam durch Berechnung bestimmt werden.

**5.** Verfahren zum Entwerfen gemäß Anspruch 3 oder 4, wobei der Systemparameter eine Durchflussrate des Ventils ist.

**6.** Verfahren zur Herstellung eines Ventils, umfassend einen Schritt des Entwerfens eines Ventils gemäß einem Verfahren zum Entwerfen eines Ventils gemäß einem der Ansprüche 1 bis 5 und dann einen Schritt des Herstellens des so entworfenen Ventils.

## Claims

**1.** A design method for designing a valve (12) presenting a fluid flow orifice (36) of variable section (S), said section depending on the position of a valve member (30) of the valve, the position of said valve member being controlled by a command applied to the valve; the method being **characterized by** comprising the following steps:

    a) determining a desired variation relationship (S*(t)) for the flow section of the valve, defining desired variation in the flow section (S) of the valve as a function of time, at least over a time interval ($\Delta$t);
    b) setting a predetermined movement relationship (P(t)) that the valve member is desired to follow during said interval; and
    c) defining the shape of said fluid flow orifice in such a manner that, at each instant (t) during said time interval, if the valve member moves during said interval in compliance with said predetermined movement relationship (P(t)), the flow section (S(t)) remains equal to the section (S*(t)) desired for that instant.

**2.** A design method according to claim 1, wherein said movement relationship is a constant speed movement relationship.

**3.** A design method according to claim 1 or claim 2, wherein a desired variation relationship (F*(t)) is set for a parameter of a system of which the valve forms a part; said desired variation relationship (S*(t)) for the section of the valve is determined as a function of said desired variation relationship (F*(t)) for the parameter.

**4.** A design method according to claim 1 or claim 2, wherein both said desired variation relationship (S*(t)) for the section of the valve and a desired variation relationship (F*(t)) for a parameter of a system of which the valve forms a part are determined jointly by calculation.

**5.** A design method according to claim 3 or claim 4, wherein said parameter of the system is a flow rate of said valve.

**6.** A method of fabricating a valve, the method including a step of designing a valve using the valve design method according to any one of claims 1 to 5, followed by a step of fabricating the valve as designed in this way.

FIG.1

FIG.2

EP 3 055 596 B1

FIG.3A

FIG.3B

FIG.3C

**RÉFÉRENCES CITÉES DANS LA DESCRIPTION**

**Documents brevets cités dans la description**

- US 2012085951 A
- US 6135414 A
- US 2008054208 A
- WO 2007118666 A